# EUROPÄISCHE PATENTSCHRIFT

(11) **EP 0 848 935 B1**
(45) Veröffentlichungstag und Bekanntmachung des Hinweises auf die Patenterteilung: **14.07.2004**
(21) Anmeldenummer: 97118900.6
(22) Anmeldetag: 30.10.1997
(51) Int. Cl.: A61C 5/06, B05C 17/005

(54) **Spritze**
Syringe
Seringue

(30) Priorität: 13.12.1996 DE 19651981
(43) Veröffentlichungstag der Anmeldung: 24.06.1998
(73) Patentinhaber: Ivoclar Vivadent AG, 9494 Schaan (LI)
(72) Erfinder: Mertins, Jürgen, 9473 Gams (CH); Müller, Frank, A-6800 Feldkirch (AT); Galehr, Klaus, A-6824 Schlins (AT)
(74) Vertreter: Baronetzky, Klaus, Dipl.-Ing.

(56) Entgegenhaltungen:
- CA-A- 2 175 021
- US-A- 2 903 794
- US-A- 5 484 734

## Beschreibung

Die Erfindung betrifft eine Spritze für viskose Massen, gemäß dem Oberbegriff von Anspruch 1, sowie ein Verfahren zur Herstellung einer Spritze gemäß dem Oberbegriff von Anspruch 18.

Eine derartige Spritze ist bspw. aus der US-PS 3,900,954 bekannt. Diese Spritze zeichnet sich durch eine besonders gute Ausnutzung der verwendeten Dentalmassen aus. Hierzu ist ein Austreibkörper am vorderen Ende des Kolbens der Spritze vorgesehen, der eine sich konisch verjüngende Spitze aufweist, die in einen Austreibstutzen eindringen soll und dort die Dentalmasse möglichst vollständig austreiben soll.

Zwar läßt sich mit einem derartigen Austreibkörper die in der Spritze bzw. dem Austreibstutzen verbleibende Dentalmasse reduzieren. Es verbleibt jedoch regelmäßig eine Restmenge der Dentalmasse in dem Austreibstutzen, so daß die bereitgestellte Dentalmasse, bei der es sich regelmäßig um ein hochwertiges Produkt handelt, nicht vollständig verwendet werden kann. Wenn bspw. eine lichthärtende Dentalmasse verwendet wird, härtet die Dentalmasse im Laufe der Zeit aus und verstopft damit den Austreibstutzen.

Man hat zur Vermeidung der Verluste an Dentalmasse versucht, den Austreibstutzen kürzer und kompakter zu gestalten. Da eine solche Spritze zur Applikation von Füllungsmaterialien im Mund eingesetzt wird, führt eine derartige Konstruktion jedoch dazu, daß nicht alle Zähne mit der Spritze gleich gut erreicht werden können.

So ist es aus der GB-PS 298 292 bekannt, einen ziemlich kurzen und dünnen Austreibstutzen zu verwenden, in welchen ein spezielles Endstück des an sich bereits aus Gummi bestehenden Kolbens eintreten kann. Diese Lösung ergibt jedoch nur eine vergleichsweise geringe Auspressgeschwindigkeit, und der Druck auf die auszudrückende viskose Masse steigt mit Verringerung des Strömungsquerschnitts des Austreibstutzens. Zudem ist die Betätigungskraft aufgrund der Reibung eines Vollgummikolbens ziemlich groß, wenn das für die Dichtung erforderliche Übermaß bei einem derartigen Kolben verwendet wird, so daß es nicht verwunderlich ist, daß sich derartige Vollgummikolben nicht durchgesetzt haben.

Insbesondere bei zur Spritzenachse geneigtem Austreibstutzen ist der Austreibkörper in dem Austreibstutzen bei der bekannten Lösung vergleichsweise schlecht geführt. Das vordere Ende ist relativ frei beweglich und neigt dazu, sich durch den Druck durch den Kolben an eine Wand anzulehnen. Durch die dann asymmetrische Führung des Austreibkörpers besteht die Gefahr, daß Dentalmasse seitlich des Austreibkörpers austritt, was zur Verschmutzung der Spritze beitragen kann.

Demgegenüber liegt der Erfindung die Aufgabe zugrunde, eine Spritze für viskose Massen gemäß dem Oberbegriff von Anspruch 1 und/oder ein Verfahren zur Herstellung einer Spritze gemäß dem Oberbegriff von Anspruch 18 zu schaffen, die ein sicheres und vollständiges Austreiben der verwendeten Masse, insbesondere der Dentalmasse, ermöglichen.

Diese Aufgabe wird erfindungsgemäß durch Anspruch 1 bzw. 18 gelöst. Vorteilhafte Weiterbildungen ergeben sich aus den Unteransprüchen.

Die erfindungsgemäße Lösung erlaubt mit überraschend einfachen Mitteln das vollständige Austreiben der Dentalmasse aus dem Austreibstutzen, ohne daß eine Verkantung des Kolbens - auch bei geneigter Spitze - die Dichtfunktion des Kolbens gefährdet. Dies gilt sogar bei ausgesprochen schlank gestalteten Austreibstutzen. Besonders günstig ist es, daß im Grunde Kolben und Austreibkörper zu einem Element vereinigt sind, wobei der Austreibkörper aufgrund seiner elastischen Verformbarkeit an alle Formen der Spitze des Austreibstutzens anpaßbar ist und sich beim Vortrieb des Kolbens praktisch automatisch anpaßt.

Zwar ist eine gewisse Formhaltigkeit des Austreibkörpers erwünscht und dazu dienlich, die mit teilweise hoher Flexibilität vorliegende Masse auszutreiben. Im Grunde kommt jedoch anstelle der elastischen Verformbarkeit auch eine plastische Verformbarkeit in Betracht, solange gewährleistet ist, daß das Austreiben durch Einführen des Austreibkörpers in die Spitze zum vollständigen Herausdrücken der Masse, insbesondere der Dentalmasse, führt.

Besonders günstig ist es, wenn zwischen dem zylinderförmigen Teil der Spritze und dem Austreibstutzen ein Führungskonus für die Verformung des Austreibkörpers ausgebildet ist. Dieser leitet die Verformung des Austreibkörpers beim Vortrieb des Kolbens ein, wobei es sich versteht, daß die Abruptheit von Querschnittsübergängen zwischen dem zylindrischen Teil der Spritze und dem Austreibstutzen durch den Führungskonus vermindert wird.

Besonders günstig ist es, wenn sich der Austreibkörper derart verformen kann, daß er mit seinem vorderen Ende für das mindestens teilweise Eindringen in den Austreibstutzen geeignet ausgebildet ist. Aufgrund seiner Elastizität kann ein Teil des Austreibkörpers im zylindrischen Teil der Spritze verbleiben und dort den vorhandenen Raum ausfüllen, während ein stetiger Übergang zum Austreibstutzen aufgrund der Elastizität des verwendeten Kunststoffmaterials gewährleistet ist.

Es versteht sich, daß es bevorzugt ist, daß der Austreibkörper sich beim Endanschlag des Kolbens in der Spritze dann bis zum Ende des Austreibstutzens erstreckt, um so die auszutreibende Masse, bei der es sich insbesondere um lichthärtendes Dentalmaterial handeln kann, vollständig aus der Spritze zu exprimieren.

Durch das derartige vollständige Austreiben wird auch die Entsorgung der Spritze begünstigt, so daß die erfindungsgemäße Spritze auch besonders günstig für das Ausdrücken problematischer Massen ist, und dennoch die teure Beseitigung der verwendeten Spritze als Sondermüll vermieden werden kann.

Es versteht sich, daß der Kolben in an sich bekannter Weise entweder mit einer Druckstange oder einer Spindel betätigbar ist, und daß die Ausgestaltung im übrigen in weiten Bereichen an die Erfordernisse anpaßbar ist. Insbesondere läßt sich die erfindungsgemäße Spritze auch dann günstig einsetzen, wenn eine Ausgestaltung mit abgewinkeltem Austreibstutzen erforderlich ist, wie es bei den sogenannten Cavifils vorgegeben ist, nachdem der erfindungsgemäße Austreibkörper ohne weiteres auch seitlich verformbar ist.

Ferner ist es besonders günstig, daß partiell höhere Druckspannungen, wie sie beim Restauspressen der herkömmlichen Spritzen auftreten, die teilweise für die verwendete Masse schädlich sein können, erfindungsgemäß vermeidbar sind, so daß eine materialschonende Entnahme mit dem teilelastischen Kolben möglich ist und Totvolumen vollständig vermeidbar ist.

In Verbindung mit herkömmlichen Abfüllanlagen ergibt sich zudem der besondere Vorteil, daß ein luftfreies Befüllen erleichtert wird, nachdem auch beim Zurückdrücken des Kolbens eine Verformung des Austreibkörpers in umgekehrter Richtung ohne das Entstehen von Hohlräumen erfolgt.

Damit auch seitlich des verformbaren Austreibkörpers keine Reste der Dentalmasse verbleiben, ist es günstig, dem Austreibkörper im entspannten Zustand eine eine möglichst große Vortriebsfläche aufspannende Vorderseite zu geben. Gewünschtenfalls kann vorne an dem Austreibkörper zwar ein stumpfer Konus angebracht sein.

Es ist jedoch bevorzugt, daß sich der Austreibkörper erst im Bereich des Führungskonus' konisch zu verformen beginnt. Bevorzugt ist es in diesem Zusammenhang, wenn der Beginn des Führungskonus' zugleich den Bewegungsweg des Kolbens abschließt und damit einen Anschlag für den Kolben bildet. In diesem Zusammenhang ist es günstig, wenn das Volumen von Austreibstutzen plus Führungskonus im wesentlichen genau dem Volumen des Austreibkörpers entspricht, ggf. zzgl. des Einfederwegs des Austreibkörpers, wenn dieser aus einem kompressiblen Material ausgebildet ist.

Indem die Erfindung eine Spritze bereitstellt, die vollständig von Dentalmassen entleert werden kann, ermöglicht sie im Grunde zudem auch gleichzeitig die grundsätzliche Wiederverwertbarkeit derartiger Spritzen, ohne daß die Gefahr bestünde, daß diese von Resten der alten Dentalmasse verunreinigt wären. Dies gilt insbesondere für die vergleichsweise hochwertigen und teuren Schraubspritzen, wobei es sich versteht, daß bei Bedarf lediglich eine erneute Bestückung mit dem Austreibkörper sowie ggf. dem Kolben erfolgen kann, während der Spritzenkörper und die Antriebsmechanik vollständig wiederverwendbar ist. Insofern trägt die vollständige Austreibbarkeit von Dentalmassen zur Kostenreduktion im Dentallabor bzw. in der Zahnarztpraxis bei.

Weitere Einzelheiten, Vorteile und Merkmale der Erfindung ergeben sich aus der nachfolgenden Beschreibung zweier Ausführungsbeispiele anhand der Zeichnung.

Es zeigen:
- Fig. 1: einen Schnitt durch eine erfindungsgemäße Spritze unter Darstellung des Austreibstutzens in befülltem Zustand, also bevor mit dem Austreiben begonnen wurde;
- Fig. 2: die Spritze gemäß Fig. 1 nach Abschluß des Austreibvorgangs;
- Fig. 3: eine andere Ausführungsform einer erfindungsgemäßen Spritze in dem für das Austreiben vorbereiteten Zustand; und
- Fig. 4: die Spritze gemäß Fig. 3 nach dem Austreiben.

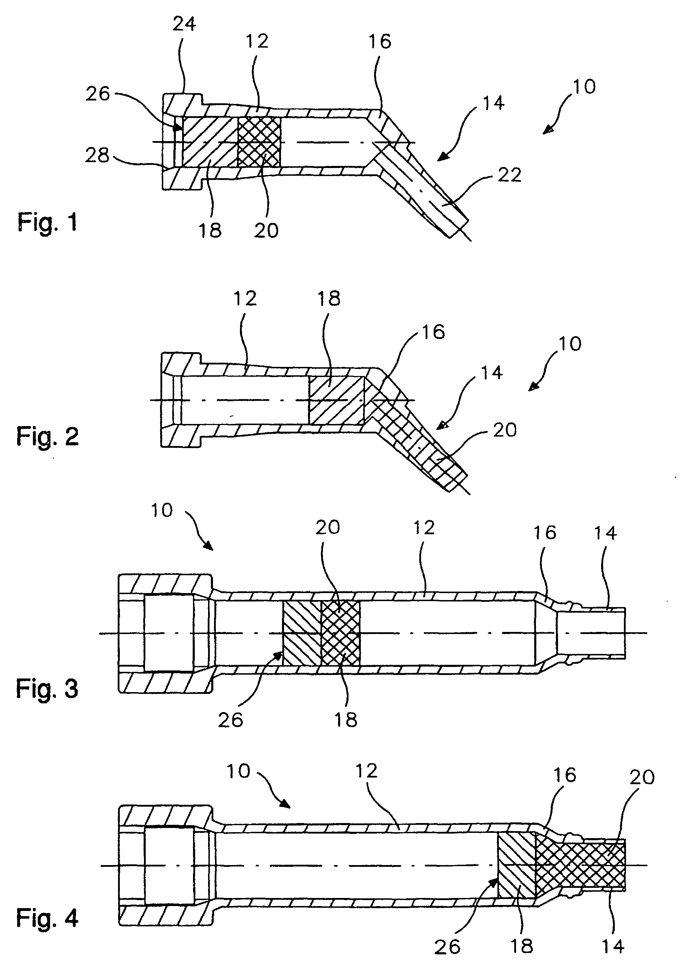

Die in Fig. 1 dargestellte Spritze 10 weist einen zylindrischen Teil 12 auf, an den sich ein Austreibstutzen 14 anschließt, der gegenüber dem zylindrischen Teil 12 einen kleineren Innenquerschnitt aufweist. Der Übergang zwischen dem zylindrischen Teil 12 und dem Austreibstutzen 14 wird durch einen Führungskonus 16 gebildet.

Die Spritze 10 weist ferner einen Kolben 18 auf, der aus einem formstabilen Material besteht. An den Kolben 18 schließt sich ein Austreibkörper 20 aus einem verformbaren Material an. Ferner ist in der Spritze einschließlich des Austreibstutzens ein Füllraum 22 für Dentalmasse vorgesehen, wobei die Spritze im Ruhezustand noch nicht gefüllt ist. Der besseren Erreichbarkeit von Zahnkavitäten und Handhabbarkeit wegen ist der Austreibstutzen 14 gegenüber der Achse von Kolben 18 und zylindrischem Teil 12 abgewinkelt.

Der Kolben 18 ist von einer nicht dargestellten Kolbenstange betätigbar, die Teil einer Spritzenhaltevorrichtung ist, die ebenfalls nicht dargestellt ist.

Die Spritzenhaltevorrichtung hintergreift Absätze 24 an dem zylindrischen Teil 12 der Spritze 10, während die Kolbenstange auf eine Druckfläche 26 des Kolbens 18 wirkt.

Im dargestellten Ausführungsbeispiel ist der Kolben 18 als vergleichsweise langer Kolben dargestellt, was der Formtreue zugute kommt. Im Grunde kann jedoch der Materialersparnis halber der Kolben wesentlich kürzer sein, bspw. auch etwa lediglich ein Drittel seines Durchmessers. Aufgrund der Elastizität des Austreibkörpers 20 wirkt dieser nämlich als Dichtelement, so daß der Kolben 18 im Grunde der gleichmäßigen Druckverteilung auf die Rückseite des Austreibkörpers 20 dient. Bei Bedarf kann der Kolben 18 auch kurzerhand durch Beschichten des Austreibkörpers 20 mit einem formstabilen Material realisiert werden.

Um das Einführen zu erleichtern, weist die Spritze 10 an ihrem rückwärtigen Ende einen Einführkonus 28 auf. Dieser ermöglicht ohne weiteres die Einführung des aus Austreibkörper 20 und Kolben 18 bestehenden Teils, auch wenn der Austreibkörper 20 in entspanntem Zustand gegenüber dem Innendurchmesser des zylindrischen Teils 12 ein Übermaß aufweist.

Der Austreibkörper 20 ist im entspannten Zustand bevorzugt zylindrisch. Gewünschtenfalls kann er im entspannten Zustand an seiner Mantelfläche auch mit einem flachen Konus versehen sein. Dann wird der Innendruck an dem dem Kolben 18 benachbarten Bereich größer, was der Dichtwirkung zugute kommt. Ferner ist es möglich, an der Spitze des Austreibkörpers 20 einen ziemlich stumpfen Kegel anzubringen, der jedenfalls einen größeren Konuswinkel als der Konuswinkel des Führungskonus' 16 aufweisen sollte.

Wie aus Fig. 2 ersichtlich ist, ist der Austreibkörper 20 so stark verformbar, daß er beim vollständigen Austreiben der Dentalmasse 22 aus der Spritze 20 den gesamten Innenraum von Führungskonus 16 und Austreibstutzen 14 ausfüllt. Im Beispielsfall weist der Austreibstutzen 14 eine zylindrische Innenform auf, wobei es sich versteht, daß der Durchmesser des Austreibstutzens 14 in einer modifizierten Ausgestaltung auch leicht abnehmen kann.

Wie aus Fig. 2 ersichtlich ist, berührt der Kolben 18 gerade in dem Zustand, in welchem der Austreibkörper 20 den Austreibstutzen 14 vollständig ausfüllt, den Führungskonus 16. Damit bildet der Führungskonus 16 zugleich einen Anschlag für den Kolben 18 und ein Signal für den Benutzer, daß ein weiteres Austreiben nicht möglich ist und die vorhandene Dentalmasse erschöpft ist. Wie aus Fig. 2 ebenfalls ersichtlich ist, verbleibt keine Dentalmasse in dem Bereich von Führungskonus 16 und Austreibstutzen 14. Die Spritze ist damit vollständig entleert und kann als Einmalteil verworfen werden.

Aus Fig. 3 ist eine weitere Ausgestaltung einer erfindungsgemäßen Spritze ersichtlich. Bei dieser Ausgestaltung verläuft der Austreibstutzen 14 koaxial im zylindrischen Teil 12. Zudem ist der Durchmesserunterschied zwischen dem Austreibstutzen 10 und dem zylindrischen Teil 12 weniger gravierend als bei der in Fig. 1 und 2 dargestellten Ausführungsform der erfindungsgemäßen Spritze 10. Bei dieser Ausführungsform verläuft der Führungskonus 16 mit einem flacheren Konuswinkel, so daß eine geringere Verformung des Austreibkörpers 20 erforderlich ist. Diese Spritze 10, die in Fig. 3 in befülltem und in Fig. 4 in entleertem Zustand dargestellt ist, ist für eine Schraubbetätigung vorgesehen, deren Elemente an sich bekannt, hier jedoch nicht im einzelnen dargestellt sind. Der Kolben 18 weist auch hier eine Druckfläche 26 auf und schließt sich unmittelbar an den Austreibkörper 20 an. Der Austreibkörper 20 ist elastisch verformbar und wird beim Eindringen in den Führungskonus 16 automatisch auf den Durchmesser des Austreibstutzens 14 verjüngt, wie es aus Fig. 4 ersichtlich ist.

Nachdem ein vergleichsweise großer Durchmesser des Austreibstutzens 14 vorliegt, kann bei Bedarf das aus Kolben 18 und Austreibkörper 20 bestehende Teil nach Lockern der Schraubstange für den Kolben zurückgeschoben werden und die Spritze neu befüllt werden, um die Wiederverwendung des Schraubantriebs zu ermöglichen. Es versteht sich, daß es bevorzugt ist, daß bei Bedarf die aus Kolben und Austreibkörper bestehende Einheit ausgetauscht werden kann.

## Patentansprüche

1. Spritze für viskose Massen, insbesondere lichthärtende Dentalmassen, mit einem Austreibstutzen und mit einem Austreibkörper, der zum Austreiben der Masse mindestens teilweise in den Austreibstutzen einführbar ist, **dadurch gekennzeichnet, daß** der Austreibkörper (20) in Anpassung an die Form des Austreibstutzens (14) verformbar und an seinem rückwärtigen Ende formstabil ausgebildet ist.

2. Spritze für viskose Massen nach Anspruch 1, **dadurch gekennzeichnet, dass** der Austreibkörper (20) elastisch verformbar ist.

3. Spritze nach Anspruch 1, **dadurch gekennzeichnet, daß** der Austreibkörper (20) an seinem rückwärtigen Ende in einen Kolben (18) übergeht oder diesen bildet, der einen Außendurchmesser aufweist, der dem Innendurchmesser des zylindrischen Teils (12) der Spritze (10) angepaßt ist und an seinem vorderen Ende für das mindestens teilweise Eindringen unter seiner Verformung in den Austreibstutzen (14) ausgebildet ist.

4. Spritze nach Anspruch 1, **dadurch gekennzeichnet, daß** der Austreibstutzen (14) zu seinem Austrittsende hin einen gleichbleibenden oder sich verjüngenden Querschnitt aufweist und insbesondere konisch zuläuft.

5. Spritze nach einem der vorhergehenden Ansprüche, **dadurch gekennzeichnet, daß** der Austreibstutzen (14) einen gegenüber dem zylindrischen Teil (12) der Spritze (10) verjüngten Querschnitt aufweist.

6. Spritze nach einem der vorhergehenden Ansprüche, **dadurch gekennzeichnet, daß** zwischen dem zylindrischen Teil (12) der Spritze (10) und dem Austreibstutzen (14) ein Führungskonus (16) für die Verformung des Austreibkörpers (20) ausgebildet ist.

7. Spritze nach einem der vorhergehenden Ansprüchen, **dadurch gekennzeichnet, daß** der Austreibkörper (20) an einem Kolben (18) befestigt, insbesondere angeklebt, ist.

8. Spritze nach einem der vorhergehenden Ansprüchen, **dadurch gekennzeichnet, daß** das Volumen des Austreibkörpers (20) im wesentlichen dem Volumen eines Führungskonus (16) und des Austreibstutzens (14) entspricht.

9. Spritze nach einem der vorhergehenden Ansprüche, **dadurch gekennzeichnet, daß** der elastisch verformbare Austreibkörper (20) an seinem rückwärtigen Ende eine Führungsscheibe zur Ausbildung eines Kolbens aufweist, mit welcher die Dichtfunktion gegenüber dem Spritzenzylinder (12) gewährleistbar ist.

10. Spritze nach einem der vorhergehnden Ansprüchen, **dadurch gekennzeichnet, daß** der Austreibkörper (20) aus Silikon oder einem anderen Elastomer mit einer Shore-Härte von 10 bis 90, insbesondere von 20 bis 60 besteht.

11. Spritze nach einem der vorhergehenden Ansprüche, **dadurch gekennzeichnet, daß** der Austreibkörper (20) in entspanntem Zustand eine Austreibspitze aufweist, deren Verjüngungswinkel größer als der Verjüngungswinkel des Austreibstutzens (14) ist.

12. Spritze nach einem der vorhergehenden Ansprüche, **dadurch gekennzeichnet, daß** der Austreibkörper (20) einen im wesentlichen unverformbaren Kolben (18) und einen an dem Kolben (18) befestigten elastischen Teil aufweist, der in den Austreibstutzen (14) einführbar ist und mit welchem die viskose Masse nahezu vollständig aus dem Austreibstutzen (14) austreibbar ist.

13. Spritze nach einem der vorhergehenden Ansprüche, **dadurch gekennzeichnet, daß** der elastische Teil des Austreibkörpers (20), insbesondere an seinem hinteren Ende, ein Übermaß zur Bildung einer Lippendichtung gegenüber dem Innendurchmesser des zylindrischen Teil (12) der Spritze (10) aufweist.

14. Spritze nach einem der vorhergehenden Ansprüche, **dadurch gekennzeichnet, daß** Austreibstutzen (14) gegenüber dem zylindrischen Teil (12) der Spritze (10), insbesondere in einen Winkel von etwa 45°, abgewinkelt ist und der Austreibkörper (20) sich im vollständig entleerten Zustand der Spritze in den Austreibstutzen (14) erstreckt.

15. Spritze nach einem der vorhergehenden Ansprüche, **dadurch gekennzeichnet, daß** der Austreibkörper (20) als fluidgefülltes, insbesondere hydrogelgefülltes Teil ausgebildet ist.

16. Spritze nach einem der vorhergehenden Ansprüche, **dadurch gekennzeichnet, daß** Austreibkörper (20) und ein Kolben (18) einstückig aus Kunststoff ausgebildet sind und die Kolbenseite durch nachträgliches Härten, insbesondere durch Teilvernetzen, hergestellt ist.

17. Spritze nach einem der vorhergehenden Ansprüche, **dadurch gekennzeichnet, daß** der Austreibkörper (20) als von dem Kolben (18) separater Teil vor einen Kolben (18) in die Spritze (10) eingelegt ist.

18. Spritze, enthaltend eine viskose Masse, mit einem Austreibstutzen und mit einem Austreibkörper, der zum Austreiben der Masse mindestens teilweise in den Austreibstutzen einführbar ist, **gekennzeichnet durch** die kennzeichnenden Merkmale von Anspruch 1 und insbesondere auch **durch** die kennzeichnenden Merkmale eines der Ansprüche 2 bis 16.

19. Verfahren zur Herstellung einer Spritze für viskose Massen, mit einem zylindrischen Teil der Spritze und einem sich daran anschließenden Austreibstutzen, wobei der zylindrische Teil der Spritze einen Kolben führt und wobei vor dem Kolben ein Austreibkörper zum Austreiben der Masse vorgesehen ist, der mindestens teilweise in den Austreibstutzen einführbar ist, **dadurch gekennzeichnet, daß** der Austreibkörper, insbesondere in 2-Schicht-Spritztechniken, mit einer vergleichsweise harten und einet vergleichsweise elastischen Schicht hergestellt wird, wobei der vordere Teil des Austreibkörpers, der zum Eindringen in den Austreibstutzen bestimmt ist, durch den Bereich der elastischen Schicht gebildet wird.

20. Verfahren nach Anspruch 18, **dadurch gekennzeichnet, daß** die für die Ausbildung des Austreibkörpers vorgesehene Doppelschicht einem Ausstanzverfahren unterzogen wird, und die ausgestanzten Austreibkörper einzeln in je eine Spritze eingebracht werden.

21. Verfahren nach einem der Anprüche 18 oder 19, **dadurch gekennzeichnet, daß** der Austreibkörper zur Erzeugung einer partiell harten Seite nachbehandelt, insbesondere nachträglich teilvernetzt wird.

## Revendications

1. Seringue pour masses visqueuses, notamment masses dentaires durcissant à la lumière, avec une tubulure d'expulsion et un corps d'expulsion qui peut être introduit au moins partiellement dans la tubulure d'expulsion pour expulser la masse, **caractérisée en ce que** le corps d'expulsion (20) est déformable en s'adaptant à la forme de la tubulure d'expulsion (14) et est conçu de façon indéformable à son extrémité arrière.

2. Seringue pour masses visqueuses selon la revendication 1, **caractérisée en ce que** le corps d'expulsion (20) est déformable élastiquement.

3. Seringue selon la revendication 1, **caractérisée en ce que** le corps d'expulsion (20) passe sur son extrémité arrière dans un piston (18) ou forme celui-ci, qui présente un diamètre extérieur qui est adapté au diamètre intérieur de la partie cylindrique (12) de la seringue (10) et sur son extrémité avant est conçu pour pénétrer au moins partiellement en se déformant dans la tubulure d'expulsion (14).

4. Seringue selon la revendication 1, **caractérisée en ce que** la tubulure d'expulsion (14) présente vers son extrémité de sortie une section transversale constante ou se rétrécissant et se termine en particulier de façon conique.

5. Seringue selon l'une des revendications précédentes, **caractérisée en ce que** la tubulure d'expulsion (14) présente une section transversale amincie par rapport à la partie cylindrique (12) de la seringue (10).

6. Seringue selon l'une des revendications précédentes, **caractérisée en ce qu'**entre la partie cylindrique (12) de la seringue (10) et la tubulure d'expulsion (14), un cône de guidage (16) est conçu pour la déformation du corps d'expulsion (20).

7. Seringue selon l'une des revendications précédentes, **caractérisée en ce que** le corps d'expulsion (20) est fixé à un piston (18), notamment collé.

8. Seringue selon l'une des revendications précédentes, **caractérisée en ce que** le volume du corps d'expulsion (20) correspond essentiellement au volume d'un cône de guidage (16) et de la tubulure d'expulsion (14).

9. Seringue selon l'une des revendications précédentes, **caractérisée en ce que** le corps d'expulsion (20) déformable élastiquement présente sur son extrémité arrière une plaque de guidage pour former un piston, avec laquelle la fonction d'étanchéité par rapport au cylindre de seringue (12) peut être garantie.

10. Seringue selon l'une des revendications précédentes, **caractérisée en ce que** le corps d'expulsion (20) est composé de silicone ou d'un autre élastomère avec une dureté Shore de 10 à 90, de préférence de 20 à 60.

11. Seringue selon l'une des revendications précédentes, **caractérisée en ce que** le corps d'expulsion (20) présente dans l'état détendu une pointe d'expulsion, dont l'angle de conicité est plus grand que l'angle de conicité du piston d'expulsion (14).

12. Seringue selon l'une des revendications précédentes, **caractérisée en ce que** le corps d'expulsion (20) présente un piston (18) essentiellement déformable et une partie élastique fixée au piston (18) qui peut être introduite dans le piston d'expulsion (14) et avec laquelle la masse visqueuse peut être expulsée presque intégralement du piston d'expulsion (14).

13. Seringue selon l'une des revendications précédentes, **caractérisée en ce que** la partie élastique du corps d'expulsion (20), notamment sur son extrémité arrière, présente un excédent destiné à former un joint à lèvres par rapport au diamètre intérieur de la partie cylindrique (12) de la seringue (10).

14. Seringue selon l'une des revendications précédentes, **caractérisée en ce que** la tubulure d'expulsion (14) est coudée par rapport à la partie cylindrique (12) de la seringue (10), notamment selon un angle de 45° environ, et le corps d'expulsion (20) s'étend dans un état entièrement vidé de la seringue dans la tubulure d'expulsion (14).

15. Seringue selon l'une des revendications précédentes, **caractérisée en ce que** le corps d'expulsion (20) est conçu comme une partie remplie de fluide, notamment une partie remplie d'hydrogel.

16. Seringue selon l'une des revendications précédentes, **caractérisée en ce que** le corps d'expulsion (20) et un piston (18) sont conçus d'une seule pièce en matière synthétique et le côté du piston est fabriqué par durcissement ultérieur, notamment par réticulation partielle.

17. Seringue selon l'une des revendications précédentes, **caractérisée en ce que** le corps d'expulsion (20) est inséré comme partie séparée du piston (18) dans la seringue (10) par un piston (18).

18. Seringue, contenant une masse visqueuse, avec une tubulure d'expulsion et avec un corps d'expulsion, qui peut être introduite au moins partiellement dans la tubulure d'expulsion pour expulser la masse, **caractérisée par** les parties caractérisantes de la revendication 1 et en particulier également par les parties caractérisantes d'une des revendications 2 à 16.

19. Procédé de fabrication d'une seringue pour masses visqueuses, avec une partie cylindrique de la seringue et une tubulure d'expulsion s'y raccordant, la partie cylindrique de la seringue guidant un piston et un corps d'expulsion étant prévu devant le piston pour expulser la masse, qui peut être introduit au moins partiellement dans la tubulure d'expulsion, **caractérisé en ce que** le corps d'expulsion, notamment dans des techniques d'injection à 2 couches, est fabriqué avec une couche comparativement dure et une couche comparativement élastique, la partie avant du corps d'expulsion étant destinée à pénétrer dans la tubulure d'expulsion, étant formée par la zone de la couche élastique.

20. Procédé selon la revendication 18, **caractérisé en ce que** la couche double prévue pour la constitution du corps d'expulsion est soumise à un procédé de découpe à la matrice, et les corps d'expulsion découpés à la matrice sont mis en place individuellement dans une seringue.

21. Procédé selon l'une des revendications 18 ou 19, **caractérisé en ce que** le corps d'expulsion est traité ultérieurement, notamment réticulé a posteriori, pour produire un côté partiellement dur.

## Claims

1. A syringe (10) for viscous compounds, in particular light-curable dental compounds, with an ejector nozzle and with an ejector body which to eject the compound can be introduced at least partly into the ejector nozzle, **characterised in that** the ejector body (20) can be deformed in adaptation to the shape of the ejector nozzle (14) and is designed to be dimensionally stable at its rear end.

2. A syringe for viscous compounds according to Claim 1, **characterised in that** the ejector body (20) is elastically deformable.

3. A syringe according to Claim 1, **characterised in that** at its rear end the ejector body (20) merges into a piston (18) or forms the latter, which has an outer diameter which is adapted to the inner diameter of the cylindrical part (12) of the syringe (10), and at its front end is designed for the at least partial penetration, under deformation thereof, into the ejector nozzle (14).

4. A syringe according to any one of the preceding Claims, **characterised in that** towards its outlet end the ejector nozzle (14) is of constant or tapering cross-section and, in particular, extends conically.

5. A syringe according to any one of the preceding Claims, **characterised in that** the ejector nozzle (14) has a cross-section tapering with respect to the cylindrical part (12) of the syringe (10).

6. A syringe according to any one of the preceding Claims, **characterised in that** a guide cone (16) for the deformation of the ejector body (20) is formed between the cylindrical part (12) of the syringe (10) and the ejector nozzle (14).

7. A syringe according to any one of the preceding Claims, **characterised in that** the ejector body (20) is fastened, in particular adhered, to a piston (18).

8. A syringe according to any one of the preceding Claims, **characterised in that** the volume of the ejector body (20) substantially corresponds to the volume of a guide cone (16) and of the ejector nozzle (14).

9. A syringe according to any one of the preceding Claims, **characterised in that** the elastically deformable ejector body (20) has at its rear end a guide disc to form a piston, with which the sealing function with respect to the syringe barrel (12) is ensured.

10. A syringe according to any one of the preceding Claims, **characterised in that** the ejector body (20) consists of silicone or another elastomer with a Shore hardness of 10 to 90, in particular 20 to 60.

11. A syringe according to any one of the preceding Claims, **characterised in that** in a relaxed state the ejector body (20) has an ejector tip whose taper angle is greater than the taper angle of the ejector nozzle (14).

12. A syringe according to any one of the preceding claims, **characterised in that** the ejector body (20) has a substantially non-deformable piston (18) and an elastic part which is fastened to the piston (18), which can be introduced into the ejector nozzle (14) and with which the viscous compound can be ejected almost completely from the ejector nozzle (14).

13. A syringe according to any one of the preceding Claims, **characterised in that**, in particular at its rear end, the elastic part of the ejector body (20) is oversized so as to form a lip seal with respect to the inner diameter of the cylindrical part (12) of the syringe (10).

14. A syringe according to any one of the preceding claims, **characterised in that** the ejector nozzle (14) is angled with respect to the cylindrical part (12) of the syringe (10), in particular at an angle of approximately 45°, and in the completely empty condition of the syringe the ejector body (20) extends into the ejector nozzle (14).

15. A syringe according to any one of the preceding Claims, **characterised in that** the ejector body (20) is in the form of a part filled with fluid, in particular a part filled with hydrogel.

16. A syringe according to any one of the preceding Claims, **characterised in that** the ejector body (20) and a piston (18) are formed in one-piece from plastics material and the piston side is produced by subsequent curing, in particular by partial crosslinking.

17. A syringe according to any one of the preceding Claims, **characterised in that** the ejector body (20) is inserted into the syringe (10) before a piston (18) and as a separate part from the piston (18).

18. A syringe, containing a viscous compound, with an ejector nozzle and with an ejector body which to eject the compound can be introduced at least partly into the ejector nozzle, **characterised by** the characterising features of Claim 1 and, in particular, also by the characterising features of any one Claims 2 to 16.

19. A method of producing a syringe for viscous compounds, with a cylindrical part of the syringe and an adjoining ejector nozzle, wherein the cylindrical part of the syringe guides a piston and wherein in front of the piston an ejector body is provided for ejecting the compound, which ejector body can be introduced at least partly into the ejector nozzle, **characterised in that** the ejector body is produced, in particular using a 2-layer injection-moulding process, with a comparatively hard layer and a comparatively elastic layer, wherein the front part of the ejector body, which is intended to penetrate into the ejector nozzle, is formed by the region of the elastic layer.

20. A method according to Claim 18, **characterised in that** the double layer provided to form the ejector body is subjected to a punching-out process and the punched-out ejector body are introduced individually into a respective syringe.

21. A method according to either Claim 18 or Claim 19, **characterised in that** the ejector body is after-treated to produce a partially hard side, in particular is subsequently partly crosslinked.
